(19) Europäisches Patentamt

European Patent Office

Office européen des brevets

(11) **EP 1 159 478 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **99973581.4**

(22) Anmeldetag: **29.10.1999**

(51) Int Cl.⁷: **D04H 13/00**, B32B 5/26

(86) Internationale Anmeldenummer:
**PCT/EP1999/008225**

(87) Internationale Veröffentlichungsnummer:
**WO 2000/040793 (13.07.2000 Gazette 2000/28)**

(54) **DREIDIMENSIONAL STRUKTURIERTES FASERFLÄCHENGEBILDE UND VERFAHREN ZUR HERSTELLUNG**

FLAT NONWOVEN FIBER AGGREGATE WITH THREE-DIMENSIONAL STRUCTURE AND METHOD FOR ITS PRODUCTION

SURFACE TEXTILE STRUCTUREE EN TROIS DIMENSIONS ET PROCEDE PERMETTANT DE LA PRODUIRE

(84) Benannte Vertragsstaaten:
**AT BE CH CY DE DK ES FI FR GB GR IE IT LI LU MC NL PT SE**

(30) Priorität: **08.01.1999 DE 19900424**

(43) Veröffentlichungstag der Anmeldung:
**05.12.2001 Patentblatt 2001/49**

(73) Patentinhaber: **Carl Freudenberg KG**
**69469 Weinheim (DE)**

(72) Erfinder:
• **GROITZSCH, Dieter**
**D-69493 Hirschberg (DE)**
• **SCHAUT, Gerhard**
**D-69502 Hemsbach (DE)**
• **GRIMM, Hans-Jörg**
**D-69469 Weinheim (DE)**

(74) Vertreter: **Ripper, Monika Sigrid, Dr. et al**
**Carl Freudenberg KG,**
**Höhnerweg 2-4**
**69469 Weinheim (DE)**

(56) Entgegenhaltungen:
EP-A- 0 106 604　　　EP-A- 0 482 918
WO-A-98/52458　　　DE-A- 4 130 343
GB-A- 1 331 817　　　US-A- 4 302 495
US-A- 4 522 863　　　US-A- 5 393 599
US-A- 5 525 397　　　US-A- 5 733 826

**Beschreibung**

Technisches Gebiet

Die Erfindung befaßt sich mit dreidimensional strukturierten Faserflächengebilden.

Mit "dreidimensional strukturiert" werden hier Faserflächengebilde bezeichnet, bei denen die Ausrichtung und räumliche Zuordnung der Einzelfasern zueinander in der jeweils betrachteten Flächenebene von derjenigen in der nächstliegenden Flächenebene abweichen.

Insbesondere befaßt sich die Erfindung mit Faserflächengebilden, bei dem mindestens einer Schicht aus einem Gelege, Gitter oder Netz beidseitig mit Vliesstoffschichten verbunden sind.

Ein Verfahren zur Herstellung wird angegeben.

Stand der Technik

Aus US-A 4,302,495 sind gattungsgemäße Faserflächengebilde bekannt.

Eine oder mehrer Schichten aus diskontinuierlichen, thermoplastischen Polymerfasern und eine oder mehrere Schichten aus einem offenmaschigen Netzwerk aus groben, thermoplastischen, kontinuierlichen Meltblown-Fasem, welche einander in einem vorbestimmten Winkel kreuzen, sind miteinander durch thermische Verschweißung entweder flächig oder punktförmig zu einem Flächengebilde mit gleichmäßiger Dicke verbunden. Die wirr verlaufenden Kurzfasem besitzen Durchmesser zwischen 0,5 und 30 µm bei einem Flächengewicht von 10 bis 15 g/m$^2$. Es werden sowohl Kombinationen Gitter/Mikrofaserschicht/Gitter als auch Mikrofaserschicht/Gitter/Mikrofaserschicht beschrieben. Ein bevorzugter Werkstoff für sowohl die Mikrofasem als auch die Filamente des Gitters ist Polypropylen. Ein solches Flächengebilde besitzt eine sehr hohe Zugfestigkeit, gepaart mit einer präzise einstellbaren Porosität. Die Meltblown-Mikrofaserschichten bestimmen das äußere Erscheinungsbild und beispielsweise die Filtereigenschaften, während das oder die thermoplastische(n) Netz(e) der Verstärkung, der Kontrolle der Porosität und gegebenenfalls der Simulation des Erscheinungsbildes eines gewebten Textilstoffes dienen. Das Material eignet sich daher nicht nur als Filter, sondern auch als steriles Verpackungsmaterial in der Chirurgie. Weitere Anwendungsgebiete sind chemisch innerte Filtermedien oder nicht benetzbare, leichtgewichtige, thermische Isolierschichten für Kleidungsstücke, Handschuhe oder Stiefel.

Die thermische Verbindung der Schichten untereinander erfolgt unter Druck, beispielsweise zwischen erhitzten Walzen, wobei deren eine bei gewünschter Punktverschweißung entsprechende Gravuren aufweist. Zusätzlich kann vor der Erhitzung zwischen den Walzen eine Wärmestrahlung aufgebracht werden. Der Grad der Hitzeeinwirkung wird so eingestellt, daß die Fasermaterialien erweichen, aber nicht eine Temperaturerhöhung bis zu ihrem kristallinen Schmelzpunkt erfahren.

Es wurde gefunden, daß solche Faserflächengebilde Druckspitzen oder anderen starken mechanischen Kräften nicht über einen längeren Zeitraum ohne deutliche Verdichtung widerstehen, wenn sie bei Verpackung, längerer Lagerung und Transport hohen Drücken und Temperaturen bis zu 60°C ausgesetzt werden, was beispielsweise bei einem Versand in heiße Länder durchaus üblich ist.

Weiterhin sind aus den Dokumenten US-A 4,522,863; GB 1 331 817; US-A 5,525,397 und WO98/52458 dreidimensionale Flächengebilde bekannt, die aus einem einem Gelege, Gitter oder Netz besteht und beidseitig mit Vliesstoffschichten verbunden ist.

Aufgabe

Aufgabe der Erfindung ist es, ein dreidimensional strukturiertes Faserflächengebilde anzugeben, welches, auch bei Temperaturen bis zu 60°C, senkrecht zur Flächenebene einwirkenden Druckspitzen bis zu 1 psi zerstörungsfrei standhält.

Ferner soll die Erfindung eine Herstellungsverfahren für ein solches Faserflächengebilde aufzeigen.

Darstellung der Erfindung

Die Lösung dieser Aufgabe besteht in einem dreidimensional strukturierten Mehrschicht-Faserflächengebilde mit den Kennzeichen des ersten Patentanspruchs sowie in einem Verfahren gemäß dem ersten Verfahrensanspruch. Vorteilhafte Ausgestaltungen sind jeweils in den Unteransprüche genannt

Mindestens zwei Vliesstoffschichten sind mit jeweils einer Gelege-Schicht verbunden. Die Vliesstoffschichten bestehen aus mechanisch und/oder thermisch miteinander verbundenen Fasern und besitzen in Flächenrichtung einen faltenartigen Verlauf in Form von geometrischen, sich wiederholenden Erhebungen oder Wellungen.

Mindestens eine thermoplastische Gelege-, Gitter- oder Netz-Schicht mit einander überkreuzenden und an den Kreuzungspunkten durch Anschmelzen verbundenen Endlosfilamenten mit einer Dicke von 150 bis 2000 μm zwischen ihren Kreuzungspunkten und Verdickungen an den Kreuzungspunkten bis zu dem Siebenfachen dieser Werte ist in der erfindungsgemäßen Struktur vorhanden. Diese Schicht wird im folgenden der Einfachheit halber stets als Gelege bezeichnet, auch wenn es sich um andere Strukturen mit sich überkreuzenden Einzelfilamenten handelt.

Die Maschengröße des Geleges, das ist der Abstand jeweils zweier nächstliegender Filament-Kreuzungspunkte in Längsrichtung, multipliziert mit dem entsprechenden Abstand in Querrichtung, beträgt 0,01 bis 9 cm², mit der Maßgabe, daß die Filamentkreuzungspunkte in Längs- sowie in Querrichtung nicht weniger als 0,10 cm voneinander beabstandet sind.

Die jeweilige Verbindung zwischen den Faserschichten und den Gelegeschichten, ist punktuell.

Die Endlosfilamente des Geleges bestehen zum Beispiel aus Polyethylen, Polypropylen, Polyamid-6, Polyamid-6.6, Polybutylenterephthalat, Polyethylenterephthalat, Polyesterelastomeren, Copolyestem, Copolymeren aus Ethylen und Vinylacetat oder aus Polyurethan.

In einer vorteilhaften Ausgestaltung der Erfindung besteht das Gelege aus einem biaxial gereckten Netz. Das Recken in Richtung beider Filamentverläufe geschieht nach bekannten Verfahren in Längsrichtung durch Passieren des Spaltes zwischen einer langsamer und einer schneller laufenden Walze, wobei das Geschwindigkeitsverhältnis der schnelleren zur langsamer laufenden Walze das Reckverhältnis bestimmt. In Querrichtung erfolgt das Recken mittels eines sich ausweitenden Spannrahmens.

Diese bekannte Verfahrensweise bewirkt eine Dickenreduzierung der Filamente zwischen den gegenseitigen Kreuzungspunkten und somit eine Reduzierung des Flächengewichtes um bis zu 95%.

Im Rahmen der Erfindung ist es möglich, die beidseitige Abdeckung des Geleges mit Vliesstoff auch dergestalt vorzunehmen, daß jede Vliesstoffschicht unterschiedliche Eigenschaften bezüglich der Ausgestaltung ihrer Faltung oder bezüglich ihrer inhärenten Eigenschaften besitzt, wie zum Beispiel Flächengewicht, Faserart, Faserbindung.

Generell richtet sich der, Fachmann bei der Auswahl der Parameter für die Vliesstoffe bezüglich der Zusammensetzung, Faserart, Faserbindung und Faser-Ausrichtung nach den ihm bekannten Eigenschaften, welche diese Schichten besitzen sollen. Im Interesse einer hohen Eigensteifigkeit der Erhebungen und Wellungen ist eine intensive Bindung der Vliesstoff-Fasern untereinander notwendig.

Im Falle einer Fixierung der Fasem durch Bindemittel ist ein solches mit hartem Griff vorzuziehen, da hierdurch die Eigensteifigkeit und mechanische Resistenz des Faserflächengebildes insgesamt erhöht werden.

Zweckmäßig sind der Abstand von einem Filamentkreuzungspunkt zum nächsten im Gelege sowie der Verstreckungsgrad und die Filamentstärke in Längs- und Querrichtung annähernd gleich, weil dadurch nach dem Schrumpfungsvorgang Erhebungen mit kreisrundem Basisquerschnitt entstehen. Diese haben sich als am widerstandsfähigsten gegen Druckbelastungen senkrecht zur Flächenebene erwiesen.

Je nach Wahl der Ausgangsmaterialien sind mehrschichtige Faserflächengebilde mit Gewichten von 20 bis 3000 g/m² herstellbar. Produkte mit niedrigen Flächengewichten sind beispielsweise für Flüssigkeit aufnehmende und diese verteilende Schichten in Windeln geeignet, solche mit bis zu 3000 g/m² für hochvoluminöse Filtermatten mit hohem Speicherungsvermögen für das Filtrat.

Die Erfindung wird anhand der Figuren näher erläutert:

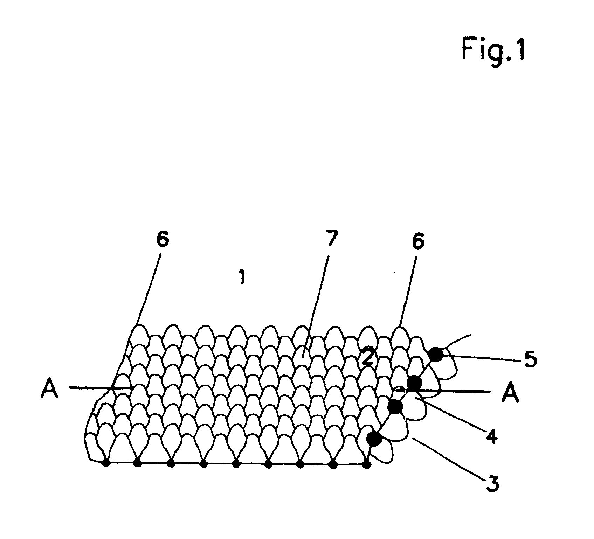

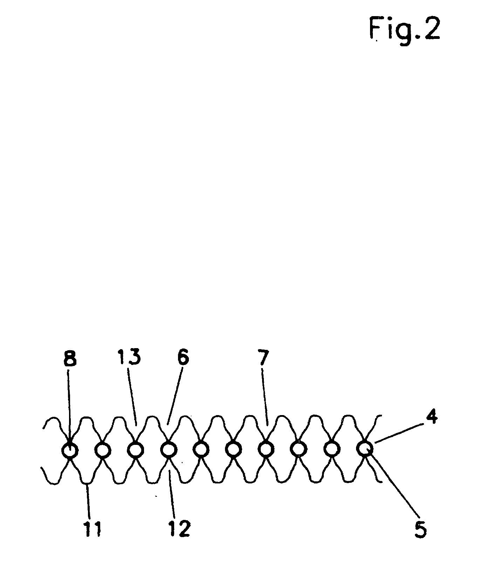

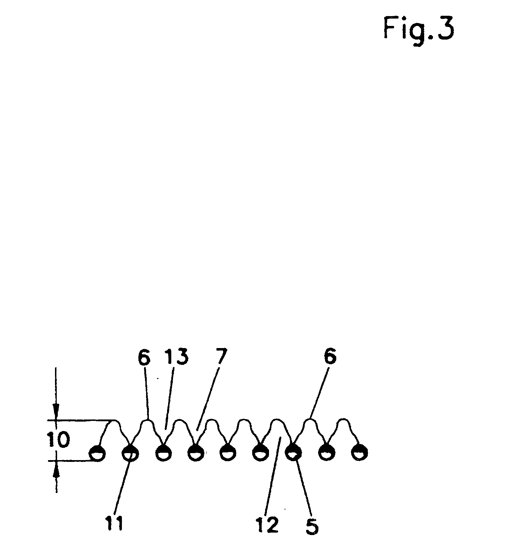

Fig. 1 zeigt den erfindungsgemäßen Gegenstand in Aufsicht;

Zunächst sei Fig. 1 betrachtet: Hier ist eine der möglichen Ausführungsformen der Erfindung in Draufsicht wiedergegeben. Das Komposit 1 setzt sich aus dem geschrumpften Gelege 4 und den beiden Vliesstofflagen 2 und 3 zusammen. Diese sind an das geschrumpfte Gelege, jedoch nicht miteinander, derart gebunden, daß auf den Vliesstoffen, beidseitig des Geleges, Erhebungen 6 und Vertiefungen 7 ausgebildet sind. Zwischen den Erhebungen und unterhalb derselben befinden sich Hohlräume 12,13, welche durchlässig für fluide Medien sind und Partikel und Stäube daraus aufnehmen. Das Gelege besteht aus sich kreuzenden Monofilamenten 5.

Das Verfahren zur Herstellung des dreidimensional strukturierten Faserflächengebildes wird durchgeführt, indem ein 3-300 g/m² schweres, ungeschrumpftes Gelege, Netz oder Gitter aus thermoplastischen Endlosfilamenten beidseitig mit einem Vliesstoff ebenflächig abdeckt und mit an sich bekannten Laminiertechniken zu einem flachen Vliesstoff verbunden wird. Der Vliesstoff kann mit allen bekannten Maßnahmen erzeugt worden sein, also trocken durch Krempeln, Kardieren oder Luftlegetechnik, durch Naßablage oder auch durch aus der Schmelze ersponnene Fasern oder Endlosfilamente. Anschließend wird der Verbund einer thermischen Behandlung unterzogen, welche ausreicht, daß das Gelege einen Flächenschrumpf erleidet. Die Vliesstofflagen, die selbst entweder keinen oder einen im Vergleich zum Gelege deutlich niedrigeren Flächenschrumpf erfahren, weichen unter Bildung von Erhebungen senkrecht zur Flächenebene aus. Der Vliesstoff kann ganzflächig oder teilflächig in sich gebunden sein. Auch perforierte Vliesstoffe können für das erfindungsgemäße Verfahren eingesetzt werden.

Durch weitere Temperaturerhöhung wird das Gelege in dem Vliesstoff zum Schrumpfen gebracht. Die Schrumpftemperatur richtet sich nach dem dem Gelege zugrundeliegenden Erweichungs- und Schmelzbereich des Thermoplasten. Zur Auslösung eines Schrumpfes muß die Temperatur zwischen diesen beiden Temperaturen liegen, wobei die Schrumpfbeträge um so höher ausfallen, je näher der tatsächlich auf das Gewirke auftreffende Temperaturstrom der Schmelztemperatur des Thermoplasten kommt. Dem Fachmann ist selbstverständlich bekannt, daß auch die Verweilzeit bei der vorgegebenen Schrumpftemperatur einen Einfluß auf das Ausmaß der Flächenschrumpfung nimmt. Die erreichbaren Beträge des Schrumpfes in Längs- und Querrichtung bzw. das Verhältnis beider Beträge zueinander können weitgehend durch die Wahl des Geleges vorbestimmt werden. Einen berührungsfreien, ungehinderten Schrumpf vorausgesetzt, ist das Verhältnis von Längs- und Querschrumpf dann 1:1, wenn die Monofilamente des Geleges in Längs- und Querrichtung den gleichen Titer und den gleichen Verstreckungsgrad aufweisen. Wird ein unterschiedlicher Schrumpf in Längsund Querrichtung gewünscht, so werden Gewirke ausgewählt, deren Monofilamente in Längs- und Querrichtung unterschiedlich verstreckt worden sind bzw. deren Titer bei gleichem Verstreckungsgrad stark unterschiedlich ausfallen. Es können auch solche Gelege eingesetzt werden, deren Monofilamente in Längs- und Querrichtung aus unterschiedlichen Thermoplasten aufgebaut sind. In diesem Fall wird der Schrumpfbetrag und die Schrumpfrichtung von der tiefer erweichenden Komponente des Geleges bestimmt, wobei eine Schrumpftemperatur gewählt wird, welche zwischen der Erweichungs- und der Schmelztemperatur der niedriger schmelzenden Komponente des Geleges liegt.

Die Vliesstoff-Bindung und die Laminierung auf das Gelege können auch in einem einzigen Schritt erfolgen. Die Wirtschaftlichkeit spricht für dieses Verfahren.

Als nicht faserige Bindemittel werden wäßrige Kunststoff-Dispersionen verwendet, die entweder ein- oder beidseitig auf den Verbund aufgedruckt werden, oder es wird eine vollständige Tränkung mit einer aufgeschäumten Mischung in einem Schaumimprägnierwerk oder mit einer ungeschäumten Mischung durch eine Vollbadtränkung mit der wäßrigen Kunststoff-Dispersion durchgeführt. Anschließend wird getrocknet und das Bindemittel in der Wärme vernetzt.

Durch die thermoplastische Aktivierung klebender Fasern innerhalb der Vliesstoffe kann eine zusätzliche innere Verfestigung erzeugt werden.

Das Verhältnis zwischen Längs- und Querschrumpf bestimmt die Form der Erhebungen in den Vliesstofflagen. Bei einem Längs-/Querverhältnis von 1:1 entstehen kuppenförmige Erhebungen mit idealisiert kreisrunder Basis. Bei einem Längs-/Querverhältnis von ungleich 1 entstehen Erhebungen mit idealisiert ovalem Querschnitt parallel zur Basis. Wird der Schrumpf beispielsweise nur in Längsrichtung vollständig verhindert, bilden sich im Längsverlauf durchgehende, rillenförmige Erhebungen auf dem Vliesstoff aus, welche idealisiert die gleich Amplitude über ihre gesamte Länge besitzen.

Es war überraschend, daß Gelege mit Gewichten unter 10 g/m$^2$ trotz beidseitiger Vliesstoffabdeckung mit Gewichten von mindestens 7 g/m$^2$ bis zu 80% der Ausgangslänge geschrumpft werden können. Man hätte vielmehr erwartet, daß die Vliesstoffe den Schrumpf des Geleges verhindern, insbesondere bei den niedrigen Ausgangs-Flächengewichten des Geleges. Dies ist jedoch nicht der Fall.

Als besonders vorteilhaft wegen seiner Einfachheit hat sich die folgende Verfahrensvariante erwiesen: Das Gelege wird beidseitig mit einem ungebundenen Faserflor abgedeckt und einer thermischen Prägekalandrierung oder Ultraschallkalandrierung unterzogen. Das daraus resultierende, flache, dreilagige Flächengebilde weist eine ausreichende Verbundfestigkeit auf. Anschließend wird, ohne Bindemittel einzusetzen, thermisch oder mit Wasserdampf geschrumpft. Für diese Verfahrensvariante werden Bikomponentenfasern mit Seite-an-Seite, exzentrischer oder kozentrischer Kern-/Mantel-Struktur eingesetzt. Die Vliesstoff-Abdeckung(en) können aus 100% dieser Bikomponenten-Fasern bestehen oder im Verschnitt mit thermoplastischen und/oder nicht thermoplastischen Homofilfasern eingesetzt werden. Hinsichtlich der Wahl an Homofilfasern sind keine Beschränkungen notwendig.

Der Schmelzpunkt der Bikomponenten-Fasern muß bezüglich der niedriger schmelzenden Komponente kleiner oder gleich dem Schmelzpunkt der den Schrumpf auslösenden Einzelfilamente des Geleges sein. Zweckmäßig sollte die Schmelzpunktdifferenz nicht höher als 40°C sein, um eine starke Versprödung der Vliesstofflagen zu verhindern.

Auch wenn der Einsatz des zur Schmelzbindung beitragenden thermoplastischen Polymers unkritisch ist, hat es sich bei einseitiger Vliesstoffabdeckung als zweckmäßig erwiesen, eine Schmelzkomponente einzusetzen, die eine chemische Verwandschaft zu dem thermoplastischen Polymer des Geleges aufweist. Ansonsten besteht die Gefahr einer schlechten Verbundfestigkeit nach der Laminierung. In diesem Zusammenhang ist es zweckmäßig, beispielsweise für ein Gelege aus Polyethylenterephthalat-Filamenten im Vliesstoff Polyester-Bikomponentenfasern mit über 200°C schmelzendem Copolyester oder Polybutylenterephthalat als Mantelkomponente einzusetzen.

Insbesondere dann, wenn Gelege und Vliesstoff durch thermische Prägekalandrierung oder Ultraschallverfestigung verbunden werden sollen, ist es vorteilhaft, das Gelege beidseitig mit Faserfloren abzudecken. Nach der Kalandrierung sind beide Flore ober- und unterhalb des Geleges an dessen offenen Bereichen musterförmig miteinander verschweißt Das Gelege ist dadurch untrennbar in das Komposit eingelagert. Die Anzahl thermischer Verschweißungspunkte zwischen Vliesstoff und Gelege an diesem ungeschrumpften Halbmaterial ist sehr niedrig bis vernachlässigbar. Die Gravurfläche der Prägewalze umfaßt 4-30% der gesamten Auflagefläche.

Insbesondere für den Fall einer geringen Differenz der Schmelztemperatur zwischen dem Gelege und der Mantelkomponente der Bikomponente-Fasern verwendet man zweckmäßig Gravurwalzen mit einer Verschweißfläche von nur 4 -14% der Gesamtfläche.

Der Schrumpf wird bereits durch eine nur einmalige thermische Behandlung ausgelöst. Es ist nicht möglich, das einmal geschrumpfte und abgekühlte Laminat durch eine zweite thermische Behandlung erneut zum Schrumpfen zu bringen.

Das erfindungsgemäße, mehrschichtige, dreidimensional strukturierte Flächengebilde kann alternierend aus Vliesstoff und Gelege bestehen. Die Vliesstoffe beidseitig des Geleges können sowohl im Aufbau als auch im Gewicht gleich oder ungleich sein. In speziellen Fällen ist es auch möglich, innere Lagen aufeinanderfolgend aus zwei Vliesstoffen vorzusehen.

Das strukturierte Faserflächengebilde kann in allen solchen Bereichen eingesetzt werden, bei denen eine hohe spezifische Oberfläche, eine hoher Fluid-Durchsatz bei einem großen Partikel-Speichervermögen oder eine hohe Kompressions-Beständigkeit bei mechanischer Belastung, insbesondere bei erhöhten Temperaturen, vorliegen. Beispiele sind Filter sowie Hygiene- oder Medikalprodukte. Auch für dekorative Zwecke im Haushalt, wie zum Beispiel Wandabdeckungen, können die erfindungsgemäßen Produkte verwendet werden.

Beispiel 1

Eine biaxial gerecktes Plastiknetz aus Polypropylen-Endlosfilamenten, mit einem Gewicht von 7,8 g/m$^2$ und einer Maschenweite von 7,6 mm • 7,6 mm, wird zwischen zwei quergelegten, losen Stapelfaserfloren mit einem Gewicht von jeweils 10 g/m$^2$ positioniert und einer Punktschweißverfestigung durch Kalandrierung zwischen einer glatten und einer gravierten Stahlwalze zugeführt. Die Verschweißfläche der gravierten Walze beträgt 9,6% bei einer Gravurtiefe von 0,73 mm. Kalandriert wird bei einer Temperatur von 140°C und einem Liniendruck von 30 kp/cm bei einer Durchlaufgeschwindigkeit von 6 m/min. Die Warenbreite ist 50 cm.

Der Vliesstoff besteht aus 90% Kern-/Mantel-Fasern mit einem Kern aus Polyethylenterephthalat und einem Mantel aus Copolyester, weicher bei 120°C schmilzt. Der Rest ist Zellwolle. Der Titer der Kern-/Mantel-Faser beträgt 4,8 dtex, ihre Schnittlänge 55 mm. Der Titer der Zellwolle beträgt 3,3 dtex bei einer Schnittlänge von 60 mm.

Das dreilagige, ebene Faserflächengebilde mit einem Gesamtgewicht von 27,8 g/m$^2$ wird anschließend einer thermischen Schrumpfbehandlung in einem Bandtrockner bei 170°C und einer Verweilzeit von 2 min und 20 s unterzogen. Das ursprünglich 50 cm breite Halbmaterial weist nach der Schrumpfung und Abkühlung eine Breite von nur noch 16 cm und ein Flächengewicht von 20 g/m$^2$ auf. Daraus errechnen sich ein linearer Schrumpf in Querrichtung von 68%, ein Flächenschrumpf von 76,8% und ein linearer Schrumpf in Längasrichtung von 27,6%.

Die mathematischen Formeln für die Schrumpfberechnung sind:

$$S_\square = \left(1 - \frac{G_v}{G_n}\right) \cdot 100 \ [\%]$$

$$S_q = \left(1 - \frac{b_n}{b_v}\right) \cdot 100 \ [\%]$$

$$S_L = \left(1 - \frac{G_v \cdot b_v}{G_n \cdot b_n}\right) \ [\%]$$

$G_v$     Flächengewicht vor dem Schrumpf in g/m$^2$
$G_n$     Flächengewicht nach dem Schrumpf in g/m$^2$
$b_v$     Warenbreite vor dem Schrumpf in m
$b_n$     Warenbreite nach dem Schrumpf in m
$S_\square$     Flächenschrumpf in %

$S_q$     linearer Schrumpf in Querrichtung in %
$S_l$     linearer Schrumpf in Längsrichtung in %

In der folgenden Tabelle sind die Dicken, gemessen unter unterschiedlichen Belastungen bei Raumtemperatur und nach einer Lagerung über 48 Stunden bei einer Belastung von 1psi, wiedergegeben. Mit den nachfolgend aufgeführten Formeln errechnen sich der Kompressionswiderstand K, die Wiedererholung W und die Kriechbeständigkeit KB, jeweils ausgedrückt in %. Die Dickenmessung für die Berechnung der Kriechbeständigkeit erfolgt bei 0,2 psi Auflagedruck.

Die Dickenmessungen wurden wie folgt durchgeführt:

Die Probe wurde 30 Sekunden lang mit einem Auflagedruck von 0,6205 kPa psi belastet und der Dickenwert nach Ablauf dieser 30 Sekunden abgelesen. Unmittelbar danach wurde der Auflagedruck durch Gewichtswechsel an dem

Dickenmeßgerät auf 1,3789 kPa erhöht und ebenfalls nach weiteren 30 Sekunden an der exakt gleichen Meßstelle die Dicke abgelesen.

Derselbe Vorgang wurde nochmals bei in der Reihenfolge der Auflagedrücke 3,4473, 6,8947 und wieder 0,6205 kPa über jeweils 30 Sekunden wiederholt.

Zur Bestimmung der Kriechbeständigkeit KB wurde der Prüfling 48 Stunden lang bei einem Druck von 1 psi bei 60°C belastet und danach die Dicke bei 1,3789 kPa Auflagedruck bestimmt.

KW, W und KB berechnen sich wie folgt:

Man erhält den Wert für KW, indem man die Dicke bei 6,8947 kPa durch die Dicke bei 0,6205 kPa teilt und mit 100 multipliziert (Angabe in %).

Man erhält den Wert für W, indem man die Dicke bei 6,8947 kPa nach Durchlauf des Meßzykluses durch den zuerst gemessenen Wert bei 6,8947 kPa teilt und mit 100 multipliziert (Angabe in %).

Man erhält den Wert für KB, indem man die Dicke des bei 60°C über 48 Stunden bei 6,8947 kPa gepreßten Prüflings durch die Dicke des ungepreßten Prüflings, jeweils gemessen bei 1,3789 kPa, teilt und mit 100 multipliziert (Angabe in %).

| Ungepreßter Schichtaufbau | | Gepreßtes Faserflächengebilde bei 60°C über 48 Stunden | |
|---|---|---|---|
| Dicke bei | | Dicke bei | |
| 0,6205 kPa | 4,996 mm | | |
| 1,3789 kPa | 4,560 mm | 1,3789 kPa | 2,485 mm |
| 3,4473 kpa | 4,168 mm | | |
| 6,8947 kPa | 3,547 mm | | |
| 0,6205 kPa | 4,318 mm | | |
| KW (%) | 71,00 | | |
| W (%) | 86,40 | KB(%) | 53 |

**Patentansprüche**

**1.** Dreidimensional strukturiertes Faserflächengebilde bestehend aus einem Gelege, Netz oder Gitter aus thermoplastischen Endlosfilamenten mit einer Maschengröße von 0,01 bis 9 cm², welches beidseitig mit einem Vliesstoff abgedeckt sind, wobei die Endlosfilamente 150 bis 2000 µm dick und an ihren Berührungspunkten jeweils thermisch miteinander verschweißt sind und die Filamentekreuzungspunkte in Längs- und Querrichtung nicht weniger als 0,10 cm voneinander entfernt sind, **dadurch gekennzeichnet, daß** die Vliesschicht sich wiederholende, faltenoder wellenförmige Erhebungen aufweist, wobei das das Ganze einer thermischen Präge-Kalandrierung oder einer Ultraschall-Kalandrierung unterzogen und durch Wärmeeinwirkung oder mittels Wasserdampf geschrumpft ist.

**2.** Faserflächengebilde nach Anspruch 1, **dadurch gekennzeichnet, daß** die Filamente der Gelegeschicht(en) an den Kreuzungspunkten eine Dickenerhöhung bis zum Siebenfachen ihrer Dicke zwischen den Kreuzungspunkten besitzen.

3. Faserflächengebilde nach Anspruch 1 oder 2, **dadurch gekennzeichnet, daß** die Einzelfasem des Vliesstoffs durch ein Bindemittel mit hartem Griff miteinander verbunden sind.

4. Faserflächengebilde nach einem der Ansprüche 1 bis 3, **dadurch gekennzeichnet, daß** die Vliesstoffiagen aus Kern-/Mantel- oder Seite-an-Seite-Bikomponentenfasem bestehen, wobei sich die Komponenten jeder Faser bezüglich ihres Erweichungspunktes unterscheiden.

5. Verfahren zur Herstellung eines dreidimensional strukturierten Faserflächengebildes in der Ausgestaltung gemäß Anspruch 1, bei dem man mindestens ein 3 bis 300 g/m$^2$ schweres Gitter, Gelege oder Netz aus Kunststoff-Endiosfilamenten mit einer Maschengröße von 0,01 bis 9 cm$^2$, bei Abständen der benachbarten Filament-Kreuzungspunkte von nicht unter 0,10 cm, mit einem Vliesstoff beidseitig abdeckt und alle Schichten mit an sich bekannten Laminiertechniken flächig miteinander verbindet, **dadurch gekennzeichnet, daß** daß man ein biaxial gerecktes Netz verwendet, das Ganze einer thermischen Präge-Kalandrierung oder einer Ultraschall-Kalandrierung unterzieht und anschließend alle Schichten des Laminats zusammen einem Schrumpfungsprozeß unterwirft bei einer Temperatur, welche zwischen dem Erweichungs- und dem Schmelzbereich des Gelege-Werkstoffs liegt.

6. Verfahren nach Anspruch 5, **dadurch gekennzeichnet, daß** man ein oder mehrere Gelege ein- oder beidseitig mit einem ungebundenen Faserflor, welcher zumindest zum Teil aus Bikomponentenfasern mit einer höher und einer niedriger schmelzenden Komponente besteht, abdeckt, wobei letztere Komponente einen Schmelzpunkt aufweist, welcher höchstens gleich demjenigen der schrumpffähigen Komponente des Geleges ist, daß das man das Ganze einer thermischen Präge-Kalandrierung oder einer Ultraschall-Kalandrierung unterzieht und daß man anschließend durch Wärmeeinwirkung oder mittels Wasserdampf die Schrumpfung durchführt.

7. Verfahren nach Anspruch 5 oder 6, **dadurch gekennzeichnet, daß** man das oder die Gelege vor dem Verarbeiten zu dem Mehrschicht-Fllächengebilde in Längsrichtung zwischen unterschiedlich schnell zueinander verlaufenden Walzen und in Querrichtung mittels eines sich erweiternden Spannrahmens reckt.

**Claims**

1. A three-dimensionally structured fibrous sheetlike construction composed of a nonwoven scrim, net or grid of thermoplastic continuous filaments which has a mesh size in the range from 0.01 to 9 cm$^2$ and is covered on both sides by a batt fabric, the continuous filaments being from 150 to 2000 μm in thickness and being thermally welded to each other at each of their contact points and the filament crossing points being not less than 0.10 cm apart from each other in the longitudinal and transverse directions, **characterized in that** the batt layer has recurring fold- or wave-shaped elevations, the entire assembly having been subjected to a thermal embossing calender operation or to an ultrasonic calender operation and shrunk by heat action or by means of water vapour.

2. A fibrous sheetlike construction according to claim 1, **characterized in that** the filaments of the nonwoven scrim layer or layers are up to seven times thicker at the crossing points than between the crossing points.

3. A fibrous sheetlike construction according to claim 1 or 2, **characterized in that** the individual fibres of the batt fabric are bound together by a binder having a harsh handle.

4. A fibrous sheetlike construction according to any of claims 1 to 3, **characterized in that** the batt fabric plies consist of core-sheath or side-by-side bicomponent fibres, the components of each fibre differing with regard to their softening point.

5. A process for producing a three-dimensionally structured fibrous sheetlike construction in the embodiment of claim 1, comprising covering at least one plastics continuous filament grid, nonwoven scrim or net which has a basis weight in the range from 3 to 300 g/m$^2$ and a mesh size in the range from 0.01 to 9 cm$^2$, and in which distances between adjacent filament crossing points are not below 0.10 cm, with a batt fabric on both sides, and area-bonding all layers to each other by known laminating techniques, **characterized in that** a biaxially oriented net is used, the entire assembly is subjected to a thermal embossing calender operation or to an ultrasonic calender operation and subsequently all the layers of the laminate are subjected together to a shrinking operation at a temperature between the softening range and the melting range of the material of construction of the nonwoven scrim.

6. A process according to claim 5, **characterized in that** one or more nonwoven scrims are covered on one or both sides with an unbonded fibrous web which is composed at least in part of bicomponent fibres having a higher melting component and a lower melting component, the latter component having a melting point which is not higher than that of the shrinkable component of the nonwoven scrim, **in that** the entire assembly is subjected to a thermal embossing calender operation or to an ultrasonic calender operation and **in that** the shrinking is subsequently carried out by heat action or by means of water vapour.

**7.** A process according to claim 5 or 6, **characterized in that** before the nonwoven scrim or scrims is or are processed into the multilayered sheetlike construction it is or they are stretched in the longitudinal direction between rolls running at different speeds and in the transverse direction by means of an expanding stenter.

**Revendications**

**1.** Structure en fibres textiles structurée en trois dimensions, comprenant une grille, filet ou treillis formé(e) de filaments sans fin thermoplastiques dont les mailles ont une grandeur comprise entre 0,01 et 9 cm$^2$, laquelle est couverte sur les deux côtés par un non-tissé, les filaments sans fin ayant une épaisseur comprise entre 150 et 2 000 μm et étant à chaque fois soudés thermiquement les uns aux autres au niveau de leurs points de contact et les points d'intersection des filaments n'étant pas éloignés de moins de 0,10 cm les uns des autres dans le sens longitudinal et transversal, **caractérisée en ce que** la couche de non-tissé est pourvue de reliefs en forme de plis ou de vagues qui se répètent, l'ensemble étant soumis à un gaufrage-calandrage thermique ou à un calandrage sous ultrasons et étant rétréci sous l'effet de la chaleur ou au moyen de vapeur d'eau.

**2.** Structure en fibres textiles selon la revendication 1, **caractérisée en ce que** les filaments de la (des) couche(s) de la grille présentent, au niveau des points d'intersection, une épaisseur qui augmente jusqu'à sept fois par rapport à leur épaisseur entre les points d'intersection.

**3.** Structure en fibres textiles selon la revendication 1 ou 2, **caractérisée en ce que** les fibres individuelles du non-tissé sont reliées les unes aux autres par un liant à prise solide.

**4.** Structure en fibres textiles selon l'une des revendications 1 à 3, **caractérisée en ce que** les couches de non-tissé sont formées de fibres à deux composants de type coeur/gaine ou côte à côte, les composants de chaque fibre ayant des points de ramollissement différents.

**5.** Procédé de fabrication d'une structure en fibres textiles structurée en trois dimensions exécutée selon la revendication 1, dans lequel on couvre d'un non-tissé, sur les deux côtés, au moins un treillis, grille ou filet de grammage compris entre 3 et 300 g/m$^2$ formé(e) de filaments sans fin en plastique dont les mailles ont une grandeur comprise entre 0,01 et 9 cm$^2$, avec des distances entre les points d'intersection de filaments contigus qui ne sont pas inférieures à 0,10 cm, et on relie toutes les couches les unes aux autres dans deux dimensions au moyen de techniques de laminage connues en soi, **caractérisé en ce qu'**on utilise un filet étiré de manière biaxiale, on soumet l'ensemble à un gaufrage-calandrage thermique ou à un calandrage sous ultrasons avant de soumettre toutes les couches de la structure laminée à un processus de rétrécissement commun à une température comprise entre le domaine de ramollissement et le domaine de fusion du matériau de la grille.

**6.** Procédé selon la revendication 5, **caractérisé en ce que** l'on couvre une ou plusieurs grille(s), sur un côté ou sur les deux côtés, d'un voile de carde non lié formé, au moins en partie, de fibres à deux composants dont l'un fond à une température plus élevée et l'autre à une température moins élevée, ce dernier composant ayant un point de fusion au maximum égal à celui du composant rétrécissable de la grille, **en ce que** l'on soumet l'ensemble à un gaufrage-calandrage thermique ou à un calandrage sous ultrasons et **en ce que** l'on procède ensuite au rétrécissement sous l'effet de la chaleur ou au moyen de vapeur d'eau.

**7.** Procédé selon la revendication 5 ou 6, **caractérisé en ce que** l'on étire la ou les grille(s) dans le sens longitudinal entre des cylindres tournant à des vitesses différentes et dans le sens transversal au moyen d'un cadre tendeur s'élargissant, avant de la/les traiter pour obtenir la structure textile à plusieurs couches.

Fig.1

Fig.2

# Fig.3